# EUROPÄISCHE PATENTSCHRIFT

(11) **EP 1 493 199 B1**
(45) Veröffentlichungstag und Bekanntmachung des Hinweises auf die Patenterteilung: **11.01.2006**
(21) Anmeldenummer: 03727290.3
(22) Anmeldetag: 11.04.2003
(51) Int. Cl.: H01M 8/00

(54) **BRENNSTOFFZELLEN-SYSTEM IN LEITERPLATTENBAUWEISE**
FUEL CELL SYSTEM IN THE FORM OF A PRINTED CIRCUIT BOARD
SYSTEME DE PILES A COMBUSTIBLE CONCU SELON LA TECHNIQUE DES CARTES DE CIRCUITS IMPRIMES

(30) Priorität: 11.04.2002 DE 10217034
(43) Veröffentlichungstag der Anmeldung: 05.01.2005
(73) Patentinhaber: Fraunhofer-Gesellschaft zur Förderung der angewandten Forschung e.V., 80686 München (DE)
(72) Erfinder: SCHMITZ, Andreas, 55546 Fürfeld (DE); HEBLING, Christopher, Dr., 79100 Freiburg (DE); HAHN, Robert, Dr., 13355 Berlin (DE); BURGER, Bruno, Dr., 78183 Hüfingen (DE)
(74) Vertreter: Golkowsky, Stefan
(86) Internationale Anmeldenummer: PCT/EP2003/003772
(87) Internationale Veröffentlichungsnummer: WO 2003/085760

(56) Entgegenhaltungen:
- WO-A-96/18217
- DE-A- 19 833 064
- DE-C- 19 502 391
- PATENT ABSTRACTS OF JAPAN vol. 2002, no. 06, 4. Juni 2002 (2002-06-04) & JP 2002 056855 A (MITSUBISHI ELECTRIC CORP), 22. Februar 2002 (2002-02-22)

## Beschreibung

Die Erfindung betrifft ein planares Brennstoffzellen-System, bei dem mindestens zwei Brennstoffzellen in der Ebene angeordnet und über sich horizontal überlappende Verschaltungsfahnen elektrisch seriell verschaltet sind, wobei der im Brennstoffzellen-System verlaufende Strompfad um die im Brennstoffzellen-system enthaltene Polymer-Elektrolyt-Membran herumgeführt ist, so daß die Membran nicht durchstoßen wird. Ferner betrifft die Erfindung ein Verfahren zur Herstellung eines solchen Brennstoffzellen-Systems.

Zur Addition der Einzelspannungen von Brennstoffzellen und zur damit verbundenen Erzielung einer höheren Gesamtspannung ist es bekannt, mehrere Brennstoffzellen elektrisch in Serie zu schalten. Naheliegenderweise werden dazu mehrere Brennstoffzellen in einem Brennstoffzellen-System zusammengebunden.

Üblicherweise werden dazu mehrere Brennstoffzellen übereinander angeordnet und von zwei Endplatten durch Verschraubungen zusammengedrückt (Stack-Design). Aufgrund dieser Konstruktion ergeben sich jedoch für die Geometrie des Brennstoffzellen-Systems eine große Bauhöhe und ein ungünstiges Verhältnis der Kantenlängen des Brennstoffzellen-Systems.

Da es für viele Anwendungen jedoch wünschenswert ist, ein Brennstoffzellen-System mit einer deutlich flacheren Geometrie zu realisieren, besteht der Bedarf, die Brennstoffzellen in einem Brennstoffzellen-System in einer Ebene in Serie zu schalten. Dazu gibt es verschiedene Ansätze im Stand der Technik:

Die Patentschrift DE 195 02 391 C1 und die PCT-Offenlegungsschrift WO 96/18217 offenbaren sogenannte "Streifenmembran-Brennstoffzellen", bei denen die Brennstoffzellen nebeneinander angeordnet und seriell miteinander verschaltet sind. Die serielle Verschaltung ist hier so realisiert, daß eine Querleitstruktur die Kathodenseite einer Brennstoffzelle mit der Anodenseite einer weiteren Brennstoffzelle verbindet und dabei die in den Brennstoffzellen enthaltene Membran durchstößt. Dabei entsteht der Nachteil, daß durch das Hindurchführen des Querleiters durch die Membran leicht Undichtigkeiten entstehen.

Die US-Patentschrift 6,127,058 offenbart ein Brennstoffzellen-System, welche in einer Ebene angeordnet sind und seriell verschaltet sind durch außenliegende Verbindungsfahnen. Bei dieser Lösung wird zwar die Membran nicht durch den Strompfad durchbrochen, der technische Herstellungsaufwand ist - besonders im Hinblick auf industrielle Massenfertigung - konstruktionsbedingt aufwendig und fehleranfällig. Weiterhin ist in erheblichem Maße nachteilig, dass für jede Zelle mindestens zwei einzeln zu montierende Teile als Stromableiter erforderlich sind.

In S.J.C. Cleghorn et al.: "A printed circuit board approach to measuring current distribution in a fuel cell", Journal of Applied Electrochemistry 28 (1998) 663-672 wird ein Ansatz beschrieben, die Stromverteilung einer Brennstoffzelle dadurch zu messen, daß eine Brennstoffzelle verwendet wird, deren Stromkollektor und Gasverteilungsstruktur (flow field) anodenseitig in Leiterplattenbauweise und segmentiert realisiert wurde. Der hier beschriebene Aufbau eignet sich jedoch nur zur ortsaufgelösten Diagnosezwecken im experimentellen Umfeld. Auch liegt hier keine Serienschaltung vor, da für diese Diagnose- bzw. Messzwecke (Strom, Spannung, Impedanzspektroskopie) nur einzelne Zellsegmente abgegriffen werden.

Aufgabe der vorliegenden Erfindung ist es, ein Brennstoffzellen-System anzugeben, welches in industrieller Massenfertigung technisch aufwandsarm und kostengünstig herstellbar ist, welches im Anwendungsbereich robust und technisch besonders unkompliziert einsetzbar ist, welches eine flache Geometrie aufweist und welches gegenüber denen im Brennstoffzellen-System enthaltenen Brennstoffzellen eine erhöhte Ausgangsspannung liefert; es sollen dabei ferner die Nachteile des genannten Standes der Technik vermieden werden.

Ferner liegt der Erfindung die Aufgabe zugrunde, ein Verfahren zur Herstellung eines solches Brennstoffzellen-Systems anzugeben.

Diese Aufgabe wird in Bezug auf das Brennstoffzellen-System durch Anspruch 1 und in Bezug auf das Herstellungsverfahren für ein solches Brennstoffzellen-System durch Anspruch 17 erfindungsgemäß gelöst.

Dadurch, daß das Brennstoffzellen-System in Leiterplattentechnik aufgebaut ist, wird eine serientaugliche und zuverlässige Herstellungstechnologie verwendet, um ein Brennstoffzellen-System mit geringer elektrischer Leistung in großen Stückzahlen kostengünstig herzustellen. Dies betrifft auch und insbesondere die Kontaktierung zwischen den im Brennstoffzellen-System enthaltenen und seriell miteinander verschalteten Brennstoffzellen, die mit bewährten industriellen Verfahren der Leiterplattentechnologie realisiert werden.

Dadurch, daß das Brennstoffzellen-System als Verbund einer ersten, anodenseitigen Leiterplatte und einer zweiten, kathodenseitigen Leiterplatte ausgeführt ist, wird zum einen die Anzahl unterschiedlicher bei der Herstellung eines solchen Systems anzufertigender Komponenten verringert und somit die Herstellung vereinfacht, zum anderen wird es ermöglicht, auf dem Leiterplattenverbund elektronische Schaltungen aufzubauen. Diese können möglicherweise die Energie zum Betrieb der Schaltung aus dem Brennstoffzellen-System selbst beziehen.

Gemäß dem Charakter der Realisierung des erfindungsgemäßen Brennstoffzellen-Systems in Leiterplattentechnologie sind Stromkollektoren, die für den Elektronentransport in der Brennstoffzelle nötig sind, und Verschaltungsfahnen, über die die im Brennstoffzellen-System enthaltenen Brennstoffzellen miteinander in der Ebene seriell verschaltet sind, als Leiterbahnen der Leiterplatten, aus denen der Leiterplattenverbund aufgebaut ist, realisiert.

Im Sinne dieser Anmeldung bezeichnet eine Leiterplatte in Leiterplattentechnik eine Platte, bestehend aus einem Leiterplattenträger mit einer aufgebrachten Metallisierung, wobei üblicherweise Teile der Metallisierung z.B. durch ein Ätzverfahren oder Fräsen abgetragen werden, so daß der verbleibenden Metallisierungsteil eine elektrisch leitfähige Leiterbahn bildet. Derartige Metallisierungen bzw. Leiterbahnen können sich auf der ersten und/oder der zweiten Seite einer Leiterplatte befinden.

Dadurch, daß sowohl Stromkollektoren als auch Verschaltungsfahnen als Leiterbahnen ausgeführt sind, sind diese in mechanisch robuster und außerdem platzsparender Weise in das Brennstoffzellen-System räumlich integriert. Es ist ferner vorteilhafterweise ermöglicht, den Stromkollektor nahtlos in die Verschaltungsfahne übergehen zu lassen, indem für die entsprechende Leiterbahn-Realisierung ein und dieselbe Metallisierungsschicht verwendet wird.

Vorteilhafte Weiterbildungen des Brennstoffzellen-Systems sind nach den Unteransprüchen 2 bis 16 möglich und werden nachfolgend erläutert:

So kann das Brennstoffzellen-System dahingehend vorteilhaft weitergebildet werden, daß sich die Verschaltungsfahnen innerhalb der Umgrenzung des Leiterplattenverbundes befinden, also die Verschaltungsfahnen nicht über den Grundriß des Leiterplattenverbundes herausragen. Es kann so die mechanische Robustheit weiter verbessert und technische Aufwand im praktischen Einsatz und bei der Weiterverarbeitung weiter verringert werden.

Wird das Brennstoffzellen-System dahingehend vorteilhaft weitergebildet, daß die sich horizontal überlappenden Verbindungsfahnen in ihrem Überlappungsbereich jeweils durch mindestens ein Kontaktierungselement verbunden sind, werden die Verbindungsfahnen miteinander wohldefiniert und haltbar miteinander in Verbindung gebracht und somit die elektrische Serienschaltung in einer der Leiterplattenbauweise entgegenkommenden Art realisiert. Insbesondere ist das Kontaktierungselement dann vorteilhaft, wenn in Verbindung mit der vorteilhaften Weiterbildung, daß die Brennstoffzellen jeweils einen in die Leiterplatte eingearbeiteten Reaktionsbereich aufweisen, der durch eine Erhebung aus Leiterplattenmaterial und/oder Lack umgrenzt ist, verwendet wird, da dann durch die senkrechten Kontaktierungselemente der entstehende vertikale Abstand zwischen den sich überlappenden Verbindungsfahnen zweier im Brennstoffzellen-System enthaltenen Brennstoffzellen überbrückt wird. Das Kontaktierungselement kann besonders vorteilhaft in einer senkrechten Ausführung realisiert werden; es ist jedoch nicht auf eine solche Ausführung beschränkt.

Eine praktische Realisierungsmöglichkeit eines solchen senkrechten Kontaktierungselementes besteht darin, es als eine Bohrung auszuführen, welche ganz oder teilweise mit elektrisch leitfähigem Material verfüllt ist, beispielsweise mit Lot oder elektrisch leitfähigem Klebstoff.

Eine vorteilhafte Weiterbildung besteht darin, zusätzlich ein elektrisch leitfähiges linienförmiges Element (Draht, Nagel oder Bolzen) durch die Bohrung zu führen, wobei der elektrische Kontakt zwischen der Verschaltungsfahne und dem leitfähigen linienförmigen Element durch in den dazwischenliegenden Zwischenraum verfülltes leitfähiges Material realisiert wird.

Die Bohrung kann an ihrer Innenseite vorteilhafterweise metallisiert sein, wodurch die Kontaktierung weiter verbessert wird und das flüssige Lot unterstützt durch Kapillarkräfte in die Bohrung hineinfliessen kann. Dies kann vorzugsweise mittels einer galvanisch gewachsenen Metallschicht realisiert sein, wobei bevorzugt Kupfer verwendet wird.

Es ist auch möglich das senkrechte Kontaktierungselement ohne Verfüllung mit elektrisch leitfähigem Material und nur mit der Metallisierung der Innenseite der Bohrung auszuführen.

Weiterhin von Vorteil ist es, mehrere Kontaktierungen je Verbindung zweier überlappender Verbindungsfahnen vorzusehen, wodurch der jeweilige Übergangswiderstand weiter reduziert wird. Ein alternatives vorteilhaftes senkrechtes Kontaktierungselement ist ein Niet oder Pressstift, der zusätzlich auch zur mechanischen Festigkeit bezüglich des Zusammenhaltes des Verbundes der Leiterplatten beiträgt.

Das Kontaktierungselement kann bei direkt aufeinanderliegenden Verbindungsfahnen oder bei nur geringem Abstand zwischen diesen durch Punktschweißen (Laser- oder Widerstandsschweißen) realisiert werden, wobei die Leiterbahn mindestens einer Seite (Kathoden- oder Andodenseite) von der Außenseite her für die Schweißung zugänglich sein muß.

Eine weitere Realisierungsmöglichkeit des Kontaktierungselements besteht darin, unter Verzicht von Bohrungen den Zwischenbereich der sich überlappenden Verbindungsfahnen mit leitfähigem Klebstoff leitfähigem Lack zu verfüllen. Eine vorteilhafte Weiterbildung dieser Ausführung besteht darin, ein Metallblech oder eine Metallfolie in den Zwischenbereich der Verbindungsfahnen einzubringen, welche von dem leitfähigen Klebstoff umgeben sind.

Vorteilhafterweise können Gasverteilerstrukturen in die erste, anodenseitige Leiterplatte und in die zweite, kathodenseitige Leiterplatte eingearbeitet werden, wobei die zweite, kathodenseitige Leiterplatte zusätzlich oder anstelle der Gasverteilerstrukturen Luftöffnungen zum äußeren des Brennstoffzellen-System aufweisen kann.

Wenn die Brennstoffzellen des Brennstoffzellen-Systems jeweils einen in die Leiterplatte eingearbeiteten Reaktionsbereich aufweisen, der durch eine Erhebung aus Leiterplattenmaterial und/oder Lack umgrenzt ist, entsteht dadurch eine Tasche, die den Reaktionsbereich definiert und weiterhin eine bessere Fixierung und eine bessere Montage der Diffusionsschicht im Reaktionsbereich ermöglicht, wie es in einer weiteren vorteilhaften Weiterbildung vorgesehen ist.

In dieser weiteren vorteilhaften Weiterbildung ist im Reaktionsbereich, in dem eine Diffusionsschicht vorgesehen ist, auch eine Gasverteilerstruktur und ein Stromkollektor enthalten und die Diffusionsschicht auf den Stromkollektor flächig aufgebracht. Die Diffusionsschicht kann dabei mittels Lötung oder elektrisch leitfähigem Klebstoff mit der Metallschicht des Stromkollektors elektrisch kontaktiert und auch mechanisch befestigt werden.

Die Erhebung aus Leiterplattenmaterial und/oder Lack kann in einer praktisch besonders vorteilhaften Form eine durchgängige Rahmenstruktur bilden, wobei das verwendete Material auflaminierter oder aufgeklebter Kunststoff, FR4, Hartpapier oder ähnliches Material, aufgedruckter Epoxid-Kleber oder ferner Lötstoplack sein kann.

Die Diffusionsschicht kann ein Kohlefaserpapier sein oder besonders vorteilhaft als metallisiertes Kunststoffgewebe ausgeführt sein, und zwar derart, daß es sich um ein Kunststoffgewebe handelt, welches bevorzugt nur im Bereich der Elektroden über metallisierte Segmente, z.B. Gold (Nickel-Gold) verfügt. Geeignete Kunststoffgewebe aus Polyamid oder Nylon mit Durchmessern der Fäden im Bereich zwischen 20 und 100 µm und Maschenweiten von 30 bis 500 µm werden als Siebdruckgewebe verwendet. Eine metallische Segmentierung kann dabei durch vorherige Maskierung bzw. Fotolithographie der Kunststoffgewebe erreicht werden.

Zur Vermeidung von Korrosion ist es vorteilhaft, die beispielsweise aus Kupfer bestehenden Leiterbahnen mit ein oder mehrlagigen elektrisch leitfähigen und beständigen Beschichtungen, etwa Nickel-Gold, Cr oder TiW, zu versehen.

Die Leiterbahnen, wie auch die übrigen Metallisierungen im Rahmen der gesamten Erfindung, können aus Kupfer, Nickel, Titan, Gold oder Edelstahl und/oder Legierungen hiervon bestehen.

Zur Abtrennung der Anodenseite von der Kathodenseite jeweils eines Reaktionsraumes, welche durch eine erste, anodenseitige und eine analog aufgebaute zweite, kathodenseitige Leiterplatte realisiert wird, wird für den Verbund der beiden Leiterplatten zwischen diesen Leiterplatten eine Protonen leitende Polymermembran verwendet, welche nur im Bereich der Reaktionsräume der Brennstoffzellen im Brennstoffzellen-System über katalytisch beschichtete Segmente verfügt. Vorzugsweise wird hierbei eine segmentierte Membrane-Electrode-Assembly (MEA) verwendet. Dabei wird diese Membran nicht vom Strompfad, d.h. durch die leiterbahnförmigen Stromkollektoren und Verschaltungsfahnen oder durch die senkrechten Verbindungselemente, welche die sich horizontal überlappenden Verschaltungsfahnen zweier Brennstoffzellen verbinden, durchstoßen.

Nachfolgend werden die Vorteile der Erfindung hinsichtlich des Herstellungsverfahrens eines erfindungsgemäßen Brennstoffzellen-Systems beschrieben:

Dadurch, daß ein erster und ein zweiter Leiterplattenträger jeweils mit einer Oberseite und einer Unterseite ausgewählt wird und für beide Träger auf der Oberseite jeweils eine Anzahl gleicher Verfahrensschritte durchgeführt wird, läßt sich der Aufwand zur Herstellung bei industrieller Massenfertigung deutlich reduzieren. Dies etwa dadurch, daß mehrere Brennstoffzellen-Systeme aus einer einzelnen Leiterplatte heraus gefertigt werden (Mehrfachnutzung).

Dadurch, daß der Leiterplattenträger jeweils mit einer Metallisierung versehen wird, so daß eine Leiterplatte im Sinne der vorliegenden Erfindung entsteht, und dadurch, daß diese Metallisierung in Teilbereichen der Leiterplatte selektiv weggeätzt wird, so daß Leiterbahnen entstehen, werden in serienproduktionstauglicher und zuverlässiger Weise in den Reaktionsräumen als Leiterbahn realisierte Stromkollektoren und daran nahtlos angrenzende ebenfalls leiterbahnförmige Verschaltungsfahnen erzeugt.

Die Verschaltungsfahnen müssen dabei nicht notwendigerweise in der gleichen Ebene mit den Stromkollektoren sein, sondern können auch als eine weitere Leiterbahn in Form einer Metallisierung auf der Unterseite der Leiterplatte realisiert sein.

Dadurch, daß Gasverteilerstrukturen in die Leiterplatte eingearbeitet werden, werden die Reaktanden dem Reaktionsraum zugeführt und dort verteilt. Daß Einarbeiten kann beispielsweise durch Fräsen stattfinden, wobei im Falle einer dünnen Leiterbahn im Reaktionsbereich (beispielsweise etwa 30 µm bis 100 µm) durch die Leiterbahnebene hindurch in Richtung Leiterplatten-Unterseite gefräst wird und im Falle einer dicken Leiterbahn-Schicht (z.B. 200 µm bis 500 µm) in die Leiterbahnschicht selbst hineingefräst oder hineingeätzt wird.

Dadurch, daß eine die Reaktionsräume umgebende Erhebung aufgebracht wird, entsteht im Bereich der Reaktionsräume jeweils eine Vertiefung, wodurch vorteilhafterweise die Montage der Diffusionsschichten vereinfacht wird. Bei dieser Montage kann eine elektrische und mechanische Verbindung mit der Leiterbahnebene und der Diffusionsschicht mittels Löten oder leitfähigem Kleber realisiert werden. Die Montage kann auch nur durch punktuelle mechanische Verbindung mittels nicht-leitfähigem Klebstoff unterstützt werden.

Auf diese Weise entsteht zunächst ein erstes und ein zweites Zwischenprodukt.

Dadurch, daß anschließend die Membrane-Electrode-Assembly (MEA) auf die Oberseite des ersten Zwischenproduktes aufgebracht wird, und daß erste und das zweite Zwischenprodukt mit deren Oberseiten zueinander zusammengefügt werden, entstehen durch die MEA abgetrennte anodenseitige und kathodenseitige Reaktionsräume. Diese Zusammenfügung kann dadurch realisiert werden, daß die beiden Platten außerhalb der Reaktionsbereiche miteinander verschraubt werden und/oder unter Druck miteinander verklebt werden, wodurch sich der Kontaktwiderstand zwischen Leiterbahn und Diffusionsschicht sowie zwischen Diffusionsschicht und Membranelektrodeneinheit reduziert.

Dadurch, daß die Verschaltungsfahnen der anodenseitigen und kathodenseitigen Leiterplatte miteinander verbunden werden, wird die elektrische Serienschaltung der im Brennstoffzellen-System enthaltenen Brennstoffzellen hergestellt.

Die vorliegende Erfindung wird anhand mehrerer Ausführungsbeispiele mit Figuren nachstehend erläutert.
Es zeigen:
- Fig. 1: den schematischen Aufbau einer Brennstoffzelle in Leiterplattentechnologie im Querschnitt, welche erfindungsgemäß als Verbund zweier Leiterplatten ausgeführt ist,
- Fig. 2: den schematischen Aufbau der anodenseitigen Leiterplatte in Draufsicht,
- Fig. 3: den schematischen Querschnitt im Bereich des Reaktionsraumes und der MEA einer ersten Ausführungsform eines erfindungsgemäßen Brennstoffzellensystems mit drei Brennstoffzellen, welche in der Ebene in Serie geschaltet sind,
- Fig. 4: den schematischen Querschnitt im Bereich außerhalb der Membranelektrodeneinheit (MEA) durch eine erste Ausführungsform eines erfindungsgemäßen Brennstoffzellensystems mit drei Brennstoffzellen, welche in der Ebene in Serie geschaltet sind,
- Fig. 5: die schematische Ober- und Unteransicht einer der beiden in Fig. 4 dargestellten Leiterplatten des Leiterplattenverbundes ohne die aufgebrachte Erhebung, Diffusionsschicht und MEA,
- Fig. 6: den schematischen Querschnitt einer zweiten Ausführungsform des erfindungsgemäßen Brennstoffzellen-Systems, bei dem im Leiterplattenverbund drei Brennstoffzellen nicht nur über innenliegende Verschaltungsfahnen, sondern auch über Leiterbahnen an der Oberfläche des Leiterplattenverbundes in der Ebene elektrisch in Serie geschaltet sind,
- Fig. 7: die Ansicht der Ober- und Unterseiteeiner der beiden Leiterplatten des Leiterplattenverbundes in Fig. 6 ohne die aufgebrachte Erhebung, Diffusionsschicht und ohne MEA,
- Fig. 8: den schematischen Querschnitt einer dritten Ausführungsform des erfindungsgemäßen Brennstoffzellen-Systems, bei dem im Leiterplattenverbund drei Brennstoffzellen nicht nur über innenliegende Verschaltungsfahnen, sondern auch über reaktionsbereichsseitige und zueinanderliegende Leiterbahnen auf den jeweils einander zugewandten Seiten der anodenseitigen und kathodenseitigen Leiterplatte, welche über eine von außen zugängliche Öffnung verschweißt werden, in der Ebene elektrisch in Serie geschaltet sind,
- Fig. 9: die Ansicht der Ober- und Unterseite einer der beiden Leiterplatten des Leiterplattenverbundes in Fig. 8 ohne Diffusionsschicht und MEA, aber mit der aufgebrachten Erhebung,
- Fig. 10: den schematischen Querschnitt im Bereich des Reaktionsraumes einer vierten, alternativen Ausführungsform des erfindungsgemäßen Brennstoffzellensystems mit vier Brennstoffzellen, deren Anoden und Kathoden alternierend auf einer oberen und unteren Leiterplatte angeordnet sind durch Verbindung der Stromkollektoren zweier benachbarter Anoden und Kathoden mittels einer Leiterbahn in der Ebene in Serie geschaltet sind.

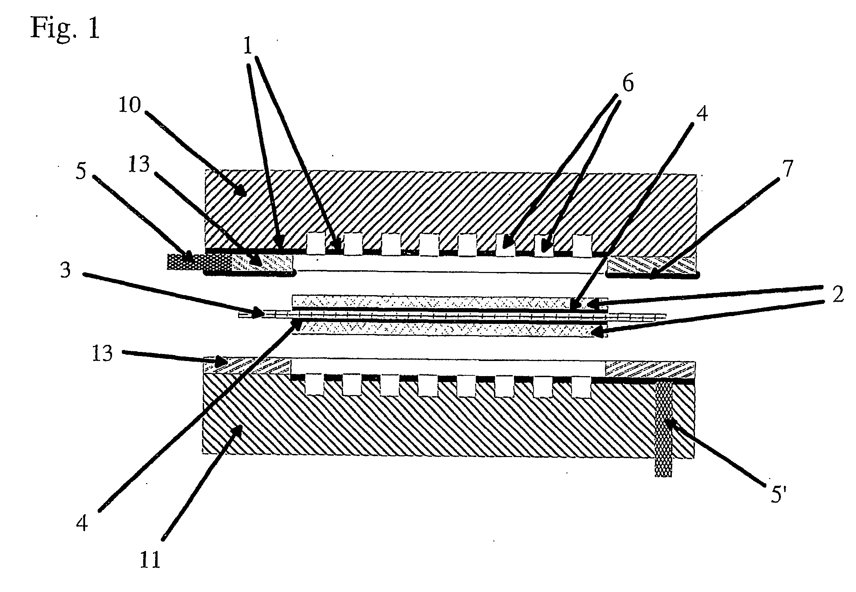

Fig. 1 zeigt einen schematischen Querschnitt durch eine Brennstoffzelle in Leiterplattentechnik, die als Verbund einer ersten, anodenseitigen Leiterplatte 10 und einer zweiten, kathodenseitigen Leiterplatte 11 ausgeführt ist. Die beiden gegenüberliegenden Leiterplatten 10 und 11, die in diesem Fall völlig gleichartig aufgebaut sind und um 180° um die Raumvertikale zueinander gedreht aufeinandergebracht sind, sind in ihrem Reaktionsbereich durch die Membranelektrodeneinheit (Membrane-Electrode-Assembly, MEA) 3 getrennt und sind an den Rändern mechanisch miteinander verbunden. Der aus den beiden Leiterplatten 10 und 11 des Leiterplattenverbundes gemeinsam gebildete Reaktionsbereich besteht dabei aus den Gasverteilerstrukturen 6, den Stromkollektoren 1 und den Diffusionsschichten 2 beider Leiterplatten sowie aus der vorgenannten MEA 3 mit der porösen katalytischen Beschichtung 4.

Wie aus der Figur zu entnehmen, sind die Gasverteilerstrukturen 6 in die Leiterplatten 10 und 11 eingearbeitet, indem jeweils die oben liegende, den Stromkollektor 1 bildende, Kupferleiterbahn durchdrungen wurde. Alternativ ist es bei dicken Kupferleiterbahnen von etwa 200 µm bis 500 µm möglich, die Gasverteilerstrukturen in die Kupferleiterbahn selbst einzuarbeiten. Durch diese Anordnung der Gasverteilerstrukturen schließt die zur MEA 3 gewandte Seite der Gasverteilerstrukturen bündig mit der Ebene der Stromkollektoren 1 ab. Auf diese Ebene ist flächenmäßig die Diffusionsschicht 2 aufgebracht, so daß sowohl die durch die Verteilerstruktur 6 herangeführten Reaktanden in die Diffusionsschicht 2 eintreten können als auch die Diffusionsschicht 2 elektrisch mit den Stromkollektoren 1 verbunden sind.

Die Diffusionsschicht kann dabei aus Kohlefaserpapier bestehen, bevorzugterweise aber auch als Kunststoffgewebe ausgeführt sein, welches im Bereich der Elektroden 1 über metallisierte Segmente (z.B. Gold, Nickel-Gold) verfügt. Geeignete Kunststoffgewebe aus Polyamid oder Nylon mit Durchmessern der Fäden im Bereich zwischen 20 µm und 100 µm und Maschenweiten von zwischen 30 µm und 500 µm werden als Siebdruckgewebe verwendet. Während Verfahren zur dauerhaften Metallisierung von derart feinen Kunststoffgeweben bekannt sind, läßt sich die Segmentstruktur durch eine der Metallisierung vorausgehende Maskierung bzw. Fotolithografie der Kunststoffgewebe erreichen.

Vorteilhafterweise ist in diesem Beispiel die Diffusionsschicht 2 mittels Lötung oder elektrisch leitfähigem Klebstoff mit dem Stromkollektor 1 elektrisch kontaktiert und auch mechanisch befestigt. Um die Diffusionsschichten 2 besser zu fixieren und die Montage der Diffusionsschicht zu vereinfachen, können die Diffusionsschichten von einer Erhebung 13 aus Leiterplattenmaterial umgeben sein, so daß in den Reaktionsbereich bildenden Teil der Leiterplatten 10 und 11 jeweils eine Vertiefung entsteht (Tasche) und somit eine Rahmenstruktur gebildet wird. Diese Rahmenstruktur ist durch den Abstand der Klebefuge 7 von der Ebene des Stromkollektors 1 gekennzeichnet und befindet sich naturgemäß außerhalb des Reaktionsbereiches. Diese Rahmenstruktur kann durch auflaminierten oder aufgeklebten Kunststoff, FR4, Hartpapier oder ähnliches Material, Aufdruck von Epoxid-Kleber, Lötstoplack oder vergleichbaren Mitteln realisiert werden.

Die Leiterbahnen in allen vorliegenden Ausführungsbeispielen sind aus Kupfer oder den anderen vorgenannten Materialien gefertigt und dienen innerhalb des Reaktionsraumes der jeweiligen Brennstoffzelle, also dort, wo die Leiterbahnen die Diffusionsschicht kontaktieren, als Stromkollektor. Außerhalb der Reaktionsräume werden die Leiterbahnen zur Ableitung des Stromes genutzt, sowohl zur Kontaktierung mit dem Stromableitungskontakt 5 zum Äußeren des Brennstoffzellen-Systems, als auch zur Bildung von Verschaltungsfahnen, d.h. für die elektrisch serielle Verschaltung der Brennstoffzellen im System untereinander. Zur Vermeidung von Korrosion ist die Kupferleiterbahn mit ein- oder mehrlagigen beständigen Beschichtungen (z.B. Nickel-Gold, Cr, TiW) zu versehen.

Die Kontakte 5 und 5' dienen zum äußeren elektrischen Anschluß des Brennstoffzellen-Systems und sind elektrisch an die Stromkollektoren 1 angebunden. Als Außenkontakte 5 und 5' können handelsübliche und standardisierte Klemmkontakte, Anschlußfahnen, Stifte, Nieten, etc. eingesetzt werden. In Fig. 1 ist die Anbringung eines seitlichen Außenkontakts 5 und alternativ dazu die Anbringung eines senkrechten Außenkontakt 5' zu der Außenseite der Leiterplatte dargestellt, welche mit der Leiterbahn mittels Löten oder Nieten elektrisch verbunden werden.

Im Falle der Verwendung von Methanol als Reaktionsmittel ist die Außenseite des anodenseitigen Gasverteilers ganz oder teilweise aus einer gaspermeablen Membran oder einer Mikrostruktur mit mikroskopischen Öffnungen gefertigt, welche es erlaubt, Kohlendioxid-Gasblasen aus dem Reaktionsraum mittels der Mikrostruktur zu transportieren und durch die mikroskopischen Öffnungen der Mikrostruktur ins Äußere auszutragen.

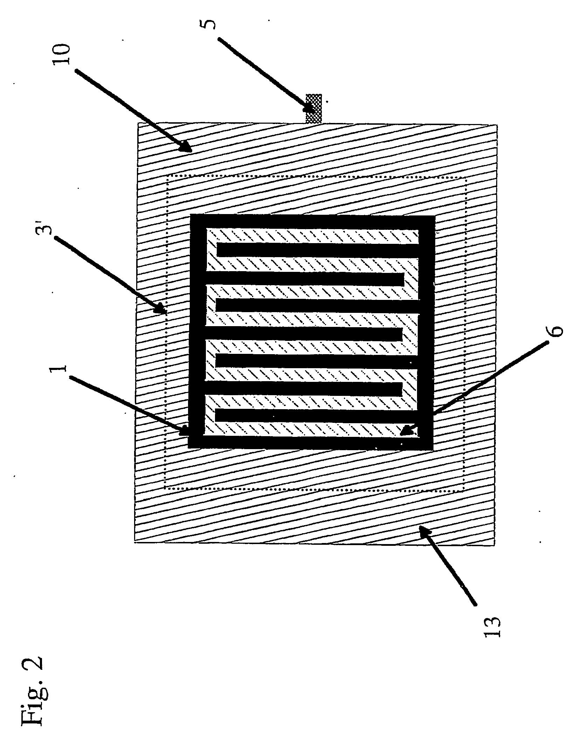

Fig. 2 zeigt die anodenseitigen Leiterplatte 10 des Brennstoffzellen-Systems aus Fig. 1 in Draufsicht. In die Ebene des Stromkollektors 1 und des darunterliegenden Leiterplattenmaterials sind die Vertiefungen der Gasverteilerstruktur 6 eingearbeitet. Die Membranelektrodeneinheit ist in dieser Darstellung nicht eingezeichnet, jedoch ist deren Lage durch die gestrichelte Linie 3' angedeutet. In der vorliegenden Ausführungsform weist die Gasverteilerstruktur einen mäanderförmigem Verlauf auf. Die mechanisch aufgebrachte, eine Rahmenstruktur bildende Erhebung 13, welche den Reaktionsraum umgibt, überdeckt in den Randbereichen den Stromkollektor 1. Daher ist der Stromkollektor 1 in der Draufsicht nur im Bereich des Reaktionsraumes erkennbar. Der von der Rahmenstruktur verdeckte Stromkollektor 1 ist seitlich mit dem Stromableitungskontakt 5 elektrisch verbunden.

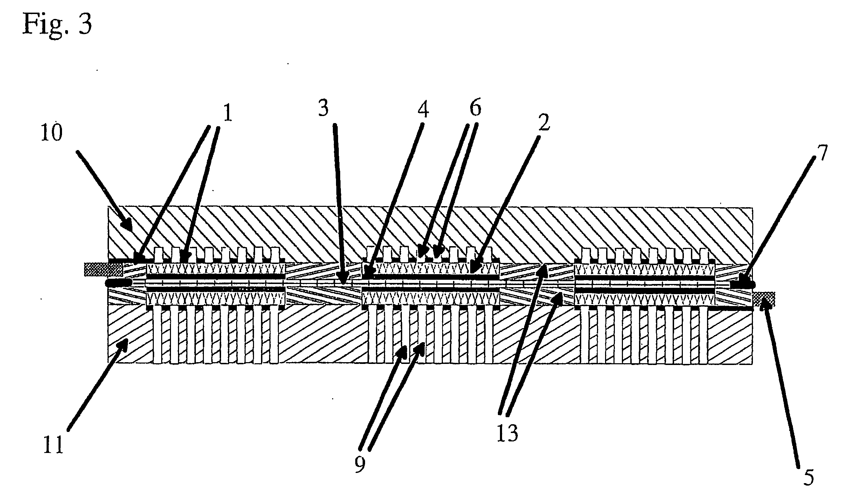

Fig. 3 zeigt ein Brennstoffzellen-System in Leiterplattentechnik, welches als Verbund einer anodenseitigen Leiterplatte 10 und einer kathodenseitigen Leiterplatte 11 grundsätzlich analog zum in Fig. 1 gezeigten Beispiel aufgebaut ist. Es sind hier in einer Ebene drei Brennstoffzellen angeordnet, welche außerhalb des Bereichs der Membranelektrodeneinheit (MEA), aber innerhalb des Leiterplattenverbundes elektrisch seriell verschaltet sind.

Da diese Figur einen Querschnitt innerhalb des Bereiches des Reaktionsraumes zeigt, ist die Serienverschaltung hier nicht näher dargestellt.

Die protonenleitende Polymermembran 3 ist vorzugsweise als segmentierte MEA ausgeführt, welche derart segmentiert ist, daß die MEA nur im Bereich der Reaktionsräume des Brennstoffzellen-Systems über katalytisch beschichtete Segmente 4 verfügt. Die Segmentierung kann dabei vorteilhaft in eine ganzflächig katalytisch beschichtete MEA eingearbeitet werden, etwa mittels Laser-Ablation oder reaktivem Ionenätzen (RIE).

Anstelle einer kathodenseitigen Gasverteilerstruktur verfügt das Ausführungsbeispiel über Luftöffnungen 9 zum Äußeren des Leiterplattenverbundes. Die Leiterplatten 10 und 11 sind zur Reduzierung des Kontaktwiderstandes am Rande miteinander verschraubt oder unter Druck verklebt; es entsteht die Verbindungsfuge 7.

Die eine Rahmenstruktur bildenden Erhebungen 13 umgrenzen hier - wie auch in den anderen Ausführungsbeispielen - die Reaktionsbereiche.

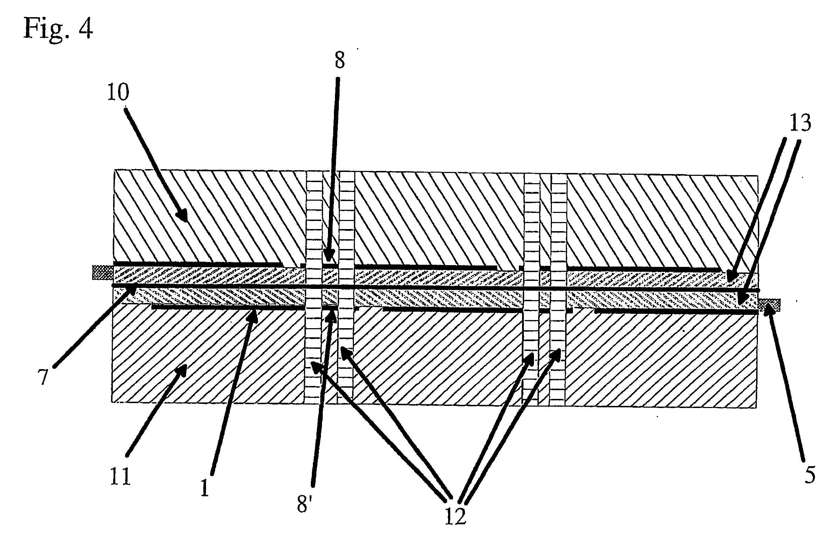

Fig. 4 zeigt einen schematischen Querschnitt außerhalb der MEA durch ein Brennstoffzellen-System von drei Brennstoffzellen in Leiterplattentechnik. Es ist hier eine bevorzugte Art dargestellt, drei Brennstoffzellen außerhalb des Bereich der MEA elektrisch seriell in der Ebene zu verschalten.

Dies geschieht dadurch, daß die Kupferleiterbahn des Stromkollektors 1 ins Äußere des Reaktionsbereiches, jedoch im Inneren der Umgrenzung des Leiterplattenverbundes verbleibend, geführt wird. Es entsteht so die Verschaltungsfahne 8' der Leiterplatte 11. Ebenso ist die Kupferleiterbahn der in Fig. 3 mittleren Brennstoffzelle nach außen geführt, die Verschaltungsfahne 8 bildend. Die Verschaltungsfahnen 8 und 8' liegen sich in vertikaler Richtung gegenüber, überlappen sich also horizontal. Dabei sind zur Herstellung des elektrischen Kontaktes die Verschaltungsfahnen 8 und 8' durch senkrechte Kontaktierungselemente 12 verbunden.

Um die Membranelektrodeneinheit (MEA) 3 nicht zu durchbrechen, wird die Leiterbahn des Stromkollektors 1 im Bereich außerhalb der Polymermembran bzw. MEA 3 in Form einer Verschaltungsfahne 8 in den Zwischenraum zweier benachbarter Brennstoffzelleneinheiten geführt. Zur Kontaktierung der sich gegenüberliegenden Leiterbahn-Fahnen 8, 8' wird eine Bohrung 12 durch den Leiterplattenverbund ausgeführt.

Durch Metallisierung der Innenseite der Bohrung 12 entsteht die leitfähige Verbindung in Form von Kontaktierungselementen 12 zwischen den Verschaltungsfahnen 8 und 8'; dies wird vorzugsweise mittels einer galvanisch gewachsenen Kupferschicht realisiert.
Um die Kontaktierung weiter zu verbessern kann Bohrung 12 ganz oder teilweise mit Lot bzw. leitfähigem Klebstoff verfüllt werden. Die Kontaktierung kann auch unter Verzicht der innenseitigen Metallisierung der Bohrung nur durch ganz oder teilweise Verfüllung der Bohrung mit Lot bzw. leitfähigem Kleber realisiert werden.

Die Kontaktierung durch ein Kontaktierungselement 12 in Form einer elektrisch leitfähig verfüllten Bohrung kann dahingehend vorteilhaft variiert werden, das vor dem Zusammenfügen der Leiterplatten 10 und 11 reaktionsbereichsseitig jeweils mit einer Bohrung größeren Durchmessers angebohrt werden, so daß eine größere Fläche der Verschaltungsfahnen 8 bis 8' freigelegt wird. Es wird dann mittels einer Bohrung kleineren Durchmessers von der entgegenliegenden Seite her eine durchgängige Bohrung hergestellt, wobei die dünnere Bohrung coaxial in der dickeren Bohrung liegt und die dünnere Bohrung die Verschaltungsfahne 8 bzw. 8' durchdringt. Durch die Verfüllung mit Lot bzw. leitfähigem Kleber kann nun, wie vorstehend beschrieben, die Kontaktierung der beiden Verschaltungsfahnen 8 und 8' miteinander durchgeführt werden. Aufgrund der dickeren ersten Bohrungen liegt insgesamt eine größere Fläche der Verschaltungsfahnen zueinander frei und es wird so eine verbesserte elektrische Kontaktierung erreicht.

Der besondere Vorzug dieser Art der Kontaktierung mittels horizontal überlappender Verschaltungsfahnen 8 und 8' und senkrechter Kontaktierungselemente 12 liegt darin, daß die protonenleitende Polymermembran 3, welche die Reaktionsräume jeweils anodenseitig und kathodenseitig voneinander abtrennt, nicht durchbrochen wird.

Wenn das Kontaktierungselement 12 anstelle einer verfüllten Bohrung durch einen Niet oder Pressstift realisiert ist, so wird gleichzeitig zur elektrischen Kontaktierung auch der Anpressdruck des Leiterplattenverbundes realisiert. Ferner weist diese Möglichkeit einen sehr geringen Kontaktwiderstand und keine Temperaturbelastung bei der Montage auf. Wird das Leiterplattenmaterial zwischen Verschaltungsfahne 8 und der reaktionsbereichsseitigen Oberfläche einer Leiterplatte 10 oder 11 entfernt, so ist auch eine Schweißverbindung möglich. Für das Verbinden der Leiterplatten 10 und 11 ist alternativ oder zusätzlich auch eine Klemmverbindung denkbar.

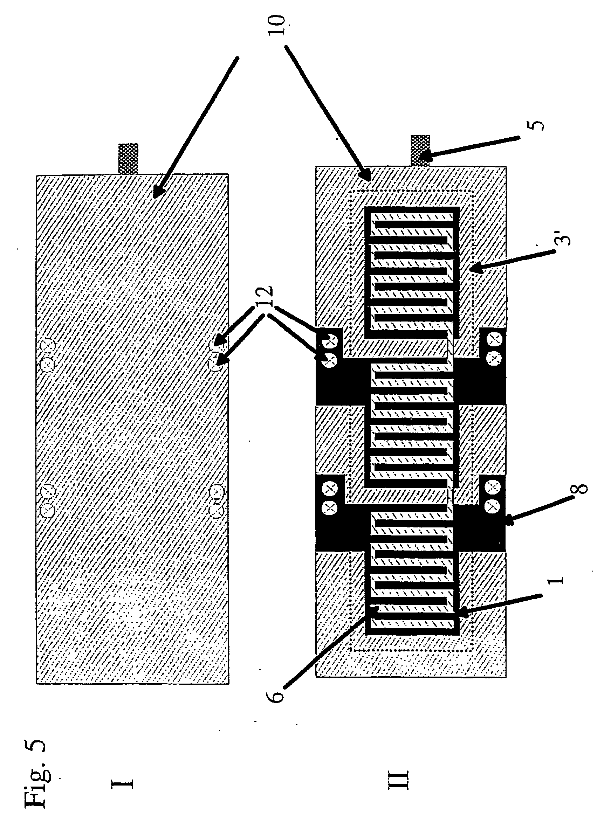

Fig. 5 zeigt die Draufsicht auf die reaktionsbereichsseitige (II) und die im Leiterplattenverbund außenliegende (I) Oberfläche der Leiterplatte 10 ohne aufgebrachte Erhebung, ohne Diffusionsschichten 2 und ohne MEA 3, wobei deren Lage durch die gestrichelte Linie 3' angedeutet ist.

Es ist reaktionsbereichsseitig (II) deutlich die serpentinenförmige Struktur der Gasverteilerstrukturen 6 zu erkennen. Der Begriff der "Gasverteilerstrukturen" bezeichnet im Sinne dieser Patentanmeldung alle Verteilerstrukturen zur Verteilung und zum Heranführen der Reaktanden im bzw. zum Reaktionsbereich. Dabei sind die Verteilerstrukturen bzw. die Reaktanden nicht auf solche beschränkt, die gasförmig sind. Ebenso sind andere Formen denkbar, etwa flüssige, wie Methanol.

In der reaktionsbereichsseitigen Ansicht (II) ist die die serpentinenförmige Gasverteilerstruktur umgebende, den Stromkollektor 1 bildende Leiterbahn zu erkennen. Diese Leiterbahn 1 geht nahtlos in die Verschaltungsfahnen 8 über, in der Zeichnung jeweils rechts oben und rechts unten von Reaktionsbereich mit Gasverteilerstruktur 6 und Stromkollektor 1. Der Reaktionsbereich, dessen Umgrenzung in dieser Figur durch das von Gasverteilerstruktur 6 und Stromkollektor 1 gebildete Rechteck dargestellt ist, liegt in der diesen Reaktionsbereich umgrenzende Tasche, die durch die in dieser Figur nicht näher dargestellte Erhebung aus Leiterplattenmaterial gebildet wird. Die Gasverteilerstruktur durchbricht dabei diese, die Tasche bildende Erhebung dort, wo zwei Brennstoffzellen hinsichtlich der Reaktandenversorgung miteinander verbunden werden.

Weiterhin sind in der Figur die senkrechten Kontaktierungselemente 12 dargestellt, sowohl von der außenliegenden Ansicht (I) wie von der reaktionsbereichsseitigen Ansicht (II), wobei in der letzteren Ansicht das Durchdringen der senkrechten Verbindungselemente durch die Verschaltungsfahnen 8 dargestellt ist.

Deutlich zu erkennen ist, daß die elektrische Verschaltung durch die Verschaltungsfahnen 8 außerhalb des Reaktionsbereiches, jedoch innerhalb der äußeren Umgrenzung der Leiterplatte 10 stattfindet. Dadurch wird nicht nur der Vorteil erreicht, daß durch die elektrische Kontaktierung die in dieser Figur nur in ihrer Lage angedeutete MEA 3' nicht durchbrochen wird und dadurch Undichtigkeiten entstehen könnten, sondern es werden auch die normalerweise hohen elektrischen Verluste in einer ebenmäßigen Anordnung von seriell verschalteten Brennstoffzellen vermindert, dadurch, daß der Strom durch die vorzugsweise verwendeten, gut leitfähigen Kupfer-Leiterbahnen, aus welchen die Stromkollektoren 1 und Verschaltungsfahnen 8 gebildet sind, zum Rand abgeleitet wird.

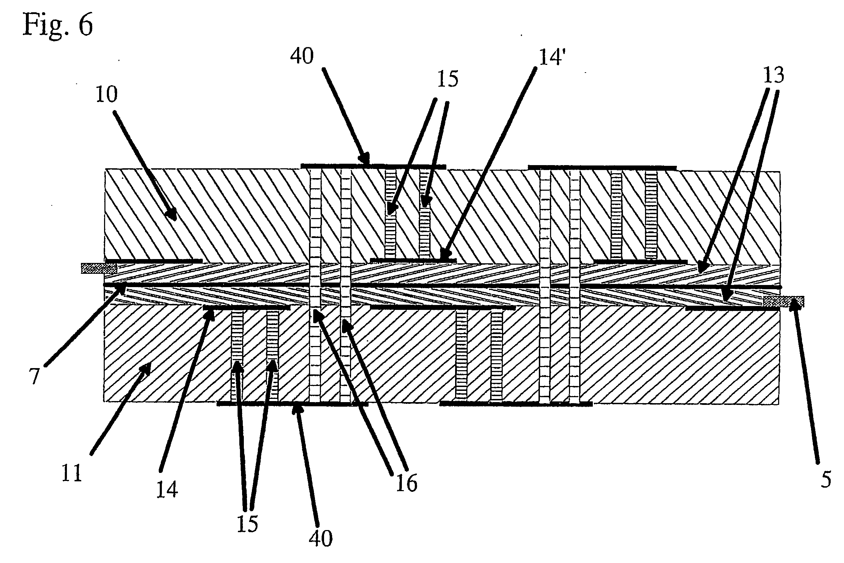

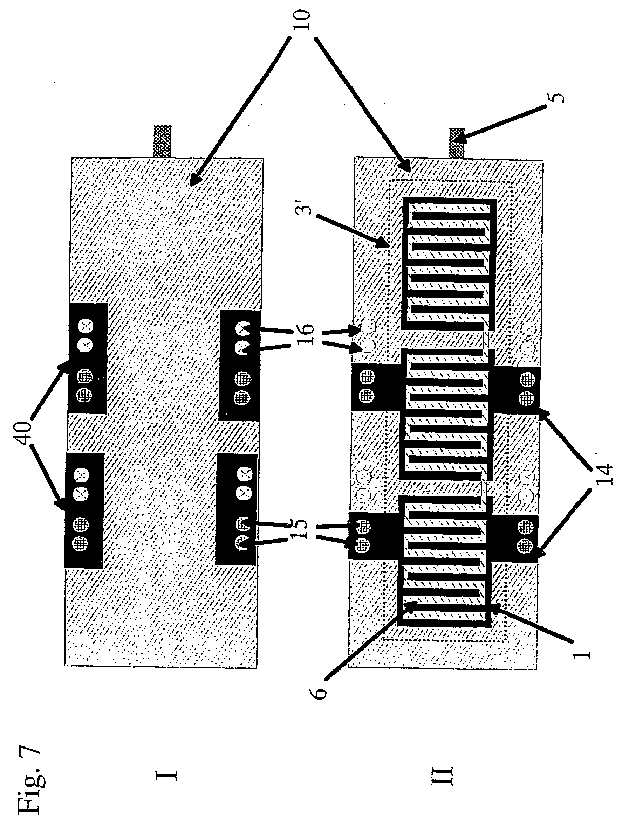

Die Figuren 6 und 7 zeigen eine zweite Ausführungsform. Hier sind die innenliegenden Verschaltungsfahnen 14 und 14' der Leiterplatten 10 und 11, ähnlich wie in Figuren und 5 dargestellt, jedoch bilden die innenliegenden Verschaltungsfahnen 14 und 14' (siehe Fig. 7) lediglich eine Verlängerung des Stromkollektors zum Außenbereich und verfügen nicht mehr über die seitlich, abgewinkelte Verlängerung in Richtung der benachbarten Brennstoffzelle der Verschaltungsfahnen 8 und 8' aus den Figuren 4 und 5.

Die Besonderheit dieser Variante der elektrisch seriellen Verschaltungen der Brennstoffzellen in der Ebene liegt darin, daß von den innenliegenden Verschaltungsfahnen 14 und 14' jeweils mindestens eine elektrische Verbindung 15 zu außenliegenden Kontakten 40 hergestellt ist, wobei die außenliegenden Leiterbahnen 40 so angeordnet sind, daß sich - analog zu den Verschaltungsfahnen 8 und 8' - die außenliegenden Verschaltungsleiterbahnen 40 jeweils zweier Brennstoffzellen wie in Fig. 6 dargestellt überlappen und durch ein oder mehrere senkrechte Kontaktierungselemente 16 miteinander verschaltet sind. Die prinzipielle Gleichartigkeit der innenliegenden Verschaltungsfahnen 14 und der außenliegenden Leiterbahnen zur Verschaltung 40 tritt besonders aus Fig. 7 hervor. In dieser Ausführungsform sind sowohl die innenliegenden Verschaltungsfahnen 14 als auch die außenliegenden Leiterbahnen 40 für die Serienverschaltung elektrisch kontaktiert, wobei die elektrische Verbindung auf prinzipiell gleichartige Weise wie in den Figuren 4 und 5 realisiert wird.

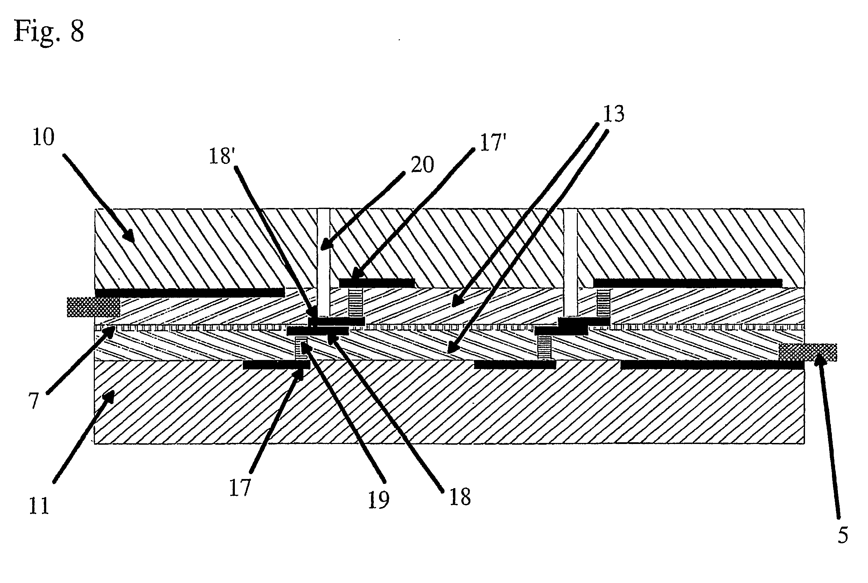

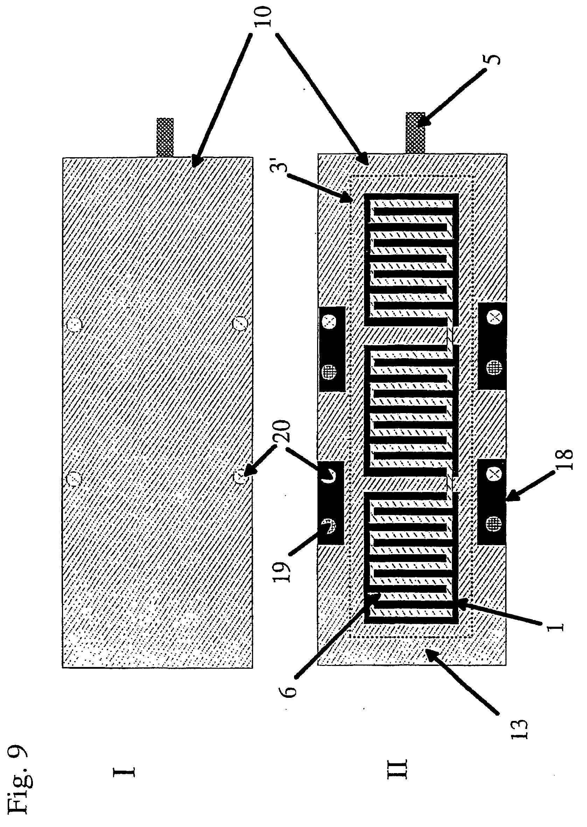

Die Figuren 8 und 9 zeigen eine dritte Ausführungsform. Hier sind die innenliegenden Verschaltungsfahnen 17 und 17' der Leiterplatten 10 und 11 mittels jeweils einem senkrechten Kontaktierungselement 19 mit denen sich reaktionsbereichsseitig einander zugewandten Leiterbahnen 18 und 18' der anodenseitigen und kathodenseitigen Leiterplatte elektrisch verbunden. Die reaktionsbereichsseitig einander zugewandten, sich also gegenüberliegenden Leiterbahnen 18 und 18' haben nur einen geringen Abstand voneinander oder bilden eine Grenzfläche. Durch die Bohrung 20 sind die innenseitigen gegenüberliegenden Leiterbahnen 18 und 18' an einer Stelle, an denen sich diese Leiterbahnen gegenüberliegen von außen zugänglich und können mittels Punkt- oder Laserschweißen dauerhaft elektrisch kontaktiert werden.

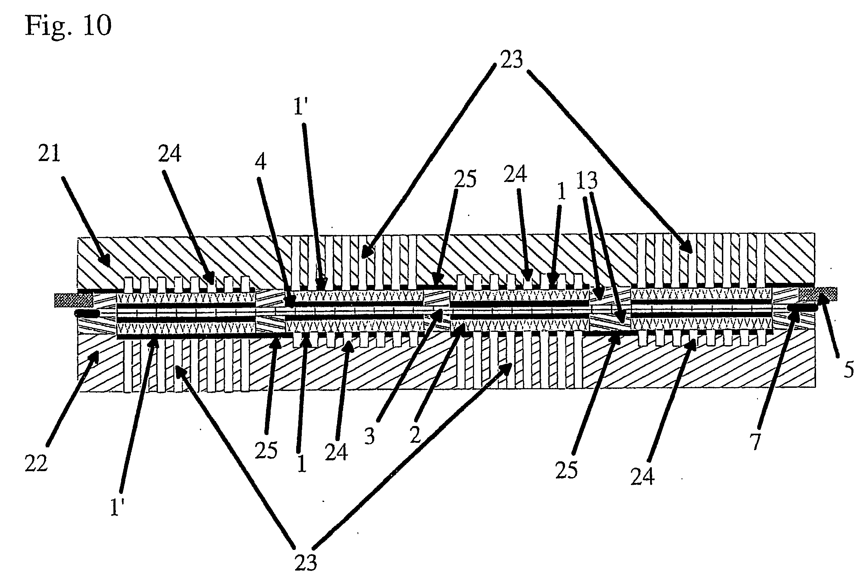

Die Figur 10 zeigt den Querschnitt durch den Reaktionsraum einer weiteren alternativen Ausführungsform, wobei auf jeder der Leiterplatten 21 und 22 Anoden-Gasverteilerstrukturen 24 und Kathoden-Gasverteilerstrukturen 23 alternierend angeordnet sind, wobei der Stromkollektor 1' des Kathoden-Gasverteilers mit dem benachbarten Stromkollektor 1 des Anoden-Gasverteilers über eine Leiterbahn 25 elektrisch verbunden sind.

In diesem Beispiel ist die Kathoden-Gasverteilerstruktur 23 mit Luftöffnungen zum Äußeren des Brennstoffzellen-System dargestellt. Anstelle der Luftöffnungen kann auch eine geschlossene Gasverteilerstruktur wie etwa die des Anoden-Gasverteilers 24 verwendet werden.

Der besondere Vorzug dieser Ausführungsform besteht darin, daß durch die alternierende Anordnung der Anoden- und Kathodenseiten der Brennstoffzellen eine Kontaktierung von der einen Seite auf die andere Seite des Leiterplattenverbundes entfällt. Die Brennstoffzelle im Leiterplattenverbund kann damit lediglich durch das Aufeinanderbringen der beiden Leiterplatten 21 und 22 realisiert werden, was konstruktiv aufwandsarm und kostengünstig herzustellen ist.

Ein erfindungsgemäßes Brennstoffzellen-System weist mit 2 mm bis 3 mm Höhe eine nur sehr geringe Bauhöhe auf. Aufgrund der flachen Geometrie eines solches Brennstoffzellen-Systems ist es besonders geeignet für eine Integration in das Außengehäuse eines Gerätes. Insbesondere in der Bauweise mit einer nach außen offenen Kathode, bzw. entsprechenden Öffnungen zur Außenseite zur Luftzufuhr, kann ein solches Brennstoffzellen-System selbstatmend und passiv betrieben werden, ohne daß konvektive Heranführen von Sauerstoff, etwa durch einen Ventilator.

Mit der Leiterplattentechnologie steht eine serientaugliche und zuverlässige Herstellungstechnik zur Verfügung, Brennstoffzellen-Systeme mit relativ geringer elektrischer Leistung in großen Stückzahlen kostengünstig und technisch aufwandsarm herzustellen. Insbesondere die elektrische Serienschaltung, d.h. die Kontaktierung von Brennstoffzelle zu Brennstoffzelle des Brennstoffzellen-Systems, kann durch ein bewährtes industrielles Verfahren realisiert werden.

Weiterhin ist sehr vorteilhaft, daß aufgrund der Ausführung als Leiterplattenverbund auf das Brennstoffzellen-System in einfacherer Weise elektronische Schaltungen aufgebaut werden können. Solche Schaltungen können zum einen das Verhalten des Brennstoffzellen-Systems erfassen, steuern oder verbessern, es kann andererseits aber auch der zu versorgende Verbraucher direkt auf dem Leiterplattenverbund aufgebracht sein. Als Beispiele für erstgenannte elektronische Schaltungen sind zu nennen: eine Elektronik für die DC-DC-Konvertierung, eine Elektronik, welche mit Sensoren ausgestattet sein kann, zur Messung und Erfassung von Betriebsparametern einzelner Brennstoffzellen (Strom, Spannung, Impedanz, Temperatur, etc.), eine Elektronik zur Steuerung der Flüsse der Reaktanden (Ansteuerung von Mikroventilen oder Mikropumpen), eine Elektronik zum Schutz einzelner Brennstoffzellen mittels Schutz- bzw. Bypassdioden oder eine Elektronik zur Überbrückung einzelner, nicht mehr funktionsfähiger Brennstoffzellen.

Ein Beispiel für einen zu versorgenden Verbraucher direkt auf der Leiterplatte in Form einer mikroelektronischen Schaltung ist z.B. ein Sensor, der durch das Brennstoffzellen-System direkt elektrisch versorgt wird.

## Patentansprüche

1. Planares Brennstoffzellen-System mit mindestens zwei Brennstoffzellen, welche über sich horizontal überlappende Verschaltungs-fahnen (8, 8', 14, 14', 40, 17, 17', 18, 18') elektrisch seriell in der Ebene verschaltet sind und jeweils anodenseitig (10) und kathodenseitig (11) mit den Verschaltungsfahnen (8, 8', 14, 14', 40, 17, 17',18, 18') elektrisch verbundene Stromkollektoren (1) aufweisen und eine Polymer-Elektrolyt-Membran (3) aufweisen, wobei der Strompfad um die Polymer-Elektrolyt-Membran (3) herumgeführt ist,
**dadurch gekennzeichnet,**
**dass** das Brennstoffzellen-System in Leiterplattentechnik und als Verbund einer ersten, anodenseitigen Leiterplatte (10) und einer zweiten, kathodenseitigen Leiterplatte (11) ausgeführt ist und die Stromkollektoren (1) und Verschaltungsfahnen (8, 8', 14, 14', 40, 17, 17',18, 18') als Leiterbahnen dieser Leiterplatten ausgeführt sind.

2. Brennstoffzellen-System nach Anspruch 1, **dadurch gekennzeichnet, dass** sich die Verschaltungsfahnen (8, 8', 14, 14', 40, 17, 17',18, 18') innerhalb der Umgrenzung des Leiterplattenverbundes befinden.

3. Brennstoffzellen-System nach einem der Ansprüche 1 oder 2, **dadurch gekennzeichnet, dass** die Verschaltungsfahnen (8, 8', 14, 14', 40, 17, 17',18, 18') in ihrem Überlappungsbereich jeweils durch mindestens ein senkrechtes Kontaktierungselement (9) verbunden sind.

4. Brennstoffzellen-System nach Anspruch 3, **dadurch gekennzeichnet, dass** das mindestens eine senkrechte Kontaktierungselement (9) eine mit elektrisch leitfähigem Material verfüllte Bohrung ist.

5. Brennstoffzellen-System nach Anspruch 4, **dadurch gekennzeichnet, dass** das elektrisch leitfähige Material (9) Lot oder elektrisch leitfähiger Klebstoff ist.

6. Brennstoffzellen-System nach einem der Ansprüche 4 oder 5, **dadurch gekennzeichnet, dass** die Bohrung (9) an ihrer Innenseite metallisiert ist.

7. Brennstoffzellen-System nach Anspruch 3, **dadurch gekennzeichnet, dass** das mindestens eine senkrechte Kontaktierungselement (9) ein Niet ist.

8. Brennstoffzellen-System nach einem der Ansprüche 1 bis 7, **dadurch gekennzeichnet, dass** Gasverteilerstrukturen (6) in die erste, anodenseitige Leiterplatte eingearbeitet sind.

9. Brennstoffzellen-System nach einem der Ansprüche 1 bis 8, **dadurch gekennzeichnet, dass** in die zweite, kathodenseitige Leiterplatte Gasverteilerstrukturen (6) eingearbeitet sind.

10. Brennstoffzellen-System nach einem der Ansprüche 1 bis 8, **dadurch gekennzeichnet, dass** in die zweite, kathodenseitige Leiterplatte Luftöffnungen nach außen eingearbeitet sind.

11. Brennstoffzellen-System nach einem der Ansprüche 1 bis 10, **dadurch gekennzeichnet, dass** die Brennstoffzellen jeweils einen in die Leiterplatte eingearbeiteten Reaktionsbereich (12) aufweisen, der durch eine Erhebung (13) aus Leiterplattenmaterial und/oder Lack umgrenzt ist.

12. Brennstoffzellen-System nach einem der Ansprüche 1 bis 11, **dadurch gekennzeichnet, dass** der Reaktionsbereich eine Gasverteilerstruktur (6) und einen Stromkollektor (1) enthält und eine Diffusionsschicht (2) vorgesehen ist, die auf den Stromkollektor (1) flächig aufgebracht ist.

13. Brennstoffzellen-System nach einem der Ansprüche 1 bis 12, **dadurch gekennzeichnet, dass** die Diffusionsschicht (2) als mit metallisierten Segmenten versehenes Kunststoffgewebe ausgeführt ist.

14. Brennstoffzellen-System nach einem der Ansprüche 1 bis 13, **dadurch gekennzeichnet, dass** die Leiterbahnen (1, 8, 8', 14, 14', 40, 17, 17', 18, 18') und/oder im Brennstoffzellen-System enthaltene Außenkontakte (5, 5') mit ein- oder mehrlagigen, elektrisch leitfähigen Schichten zur Vermeidung von Korrosion beschichtet sind.

15. Brennstoffzellen-System nach einem der Ansprüche 1 bis 14, **dadurch gekennzeichnet, dass** die Polymer-Elektrolyt-Membran (3) als segmentierte Membrane-Electrode-Assembly (MEA) ausgeführt ist.

16. Brennstoffzellen-System nach einem der Ansprüche 1 bis 15, **dadurch gekennzeichnet, dass** es auf der Oberfläche des Leiterplattenverbundes eine elektronische Schaltung aufweist.

17. Brennstoffzellen-System nach einem der Ansprüche 1 bis 16, **dadurch gekennzeichnet, dass** die Verschaltungsfahnen (18, 18') der ersten und der zweiten Leiterplatte auf diesen jeweils reaktionsbereichsseitig angeordnet sind und durch eine Schweißverbindung dauerhaft elektrisch kontaktiert sind.

18. Planares Brennstoffzellen-System mit mindestens zwei Brennstoffzellen, welche über Leiterbahnen (25) elektrisch seriell in der Ebene verschaltet sind und welche mit den Verbindungselementen (25) elektrisch verbundene Stromkollektoren (1, 1') aufweisen und eine Polymer-Elektrolyt-Membran (3) aufweisen, wobei der Strompfad um die Polymer-Elektrolyt-Membran (3) herumgeführt ist,
**dadurch gekennzeichnet,**
**dass** das Brennstoffzellen-System in Leiterplattentechnik und als Verbund einer ersten Leiterplatte (21) und einer zweiten Leiterplatte (22) ausgeführt ist und die Stromkollektoren (1, 1') und Verbindungselemente (25) als Leiterbahnen dieser Leiterplatten ausgeführt sind, wobei die Leiterplatten jeweils alternierend Anoden- und Kathoden-Gasverteilerstrukturen aufweisen und wobei jeweils ein benachbarter Anoden-Stromkollektor (1) und Kathoden-Stromkollektor (1') mittels des Verbindungselementes (25) elektrisch verbunden ist.

19. Verfahren zur Herstellung eines Brennstoffzellen-Systems nach einem der vorhergehenden Ansprüche, wobei ein erster und ein zweiter Leiterplatten-Träger (10, 11) jeweils mit einer Oberseite und einer Unterseite ausgewählt wird, und für beide Träger auf der Oberseite jeweils die Schritte
• Auftragen der Metallisierung auf den Leiterplatten-Träger, so dass eine Leiterplatte entsteht, wobei Metallfolien oder dünne Bleche aus einer Auswahl der Materialien Kupfer, Nickel, Gold, Titan oder Edelstahl und/oder einer Legierung hiervon auf das Leiterplattenmaterial auflaminiert werden oder die Metallisierung mittels Beschichten (Sputtern oder Aufdampfen) und anschließendem galvanischen Verstärken der Schicht realisiert wird.
• Selektives Wegätzen oder Fräsen der Metallisierung, so dass Leiterbahnen entstehen, welche in den Reaktionsräumen Stromkollektoren (1) und daran jeweils nahtlos angrenzende Verschaltungsfahnen (8, 8', 14, 14', 17, 17', 25) bilden
• Einarbeiten der Gasverteilerstrukturen (6) in die Leiterplatte
• Aufbringen der Diffusionsschichten (2)
durchgeführt werden und anschließend die Membrane-Electrode-Assembly (MEA) (3) auf die Oberseite der ersten Leiterplatte (10) aufgebracht wird, die erste (10) und die zweite (11) Leiterplatte mit ihren Oberseiten zueinander zusammengefügt werden und die Verschaltungsfahnen (8, 8', 14, 14', 40, 17, 17', 18, 18') senkrecht miteinander verbunden werden.

20. Verfahren nach Anspruch 19, **dadurch gekennzeichnet, dass** als Membrane-Electrode-Assembly (MEA) (3) eine ganzflächig katalytisch beschichtete MEA ausgewählt und vor dem Aufbringen auf die Leiterplatte segmentiert wird.

21. Verfahren nach Anspruch 20, **dadurch gekennzeichnet, dass** die Segmentierung der MEA (3) durch Laser-Ablation und/oder reaktives Ionenätzen eingearbeitet wird.

22. Verfahren nach einem der Ansprüche 19 bis 21, **dadurch gekennzeichnet, dass** nach dem Einarbeiten der Gasverteilerstrukturen eine die Reaktionsräume umgebende Erhebung aufgebracht wird, so dass im Bereich der Reaktionsräume jeweils eine Vertiefung entsteht.

## Revendications

1. Système de piles à combustible planaire comportant au moins deux piles à combustible qui sont électriquement connectées en série dans un plan par des barrettes de connexion (8, 8', 14, 14', 40, 17, 17', 18, 18') se chevauche horizontalement et présentent respectivement côté anode (10) et côté cathode (11) des collecteurs de courant (1) reliés électriquement avec les barrettes de connexion (8, 8', 14, 14', 40, 17, 17', 18, 18') et présentent une membrane électrolyte polymère (3), le trajet du courant étant conduit autour de la membrane électrolyte polymère (3),
**caractérisé en ce que** le système de piles à combustible est exécuté selon la technique des cartes à circuits imprimés et en tant que composite d'une première carte à circuits imprimés (10) côté anode et d'une seconde carte à circuits imprimés (11) côté cathode, et **en ce que** les collecteurs de courant (1) et les barrettes de connexion (8, 8', 14, 14', 40, 17, 17', 18, 18') sont exécutés en tant que pistes conductrices de ces cartes à circuits imprimés.

2. Système de piles à combustible selon la revendication 1, **caractérisé en ce que** les barrettes de connexion (8, 8', 14, 14', 40, 17, 17', 18, 18') se trouvent au sein de la limite du composite de cartes à circuits imprimés.

3. Système de piles à combustible selon l'une des revendications 1 ou 2,
**caractérisé en ce que** les barrettes de connexion (8, 8', 14, 14', 40, 17, 17', 18, 18') sont reliées dans leur zone de chevauchement respectivement par au moins un élément de connexion (9) vertical.

4. Système de piles à combustible selon la revendication 3, **caractérisé en ce que** le au moins un élément de connexion (9) vertical est un perçage rempli d'un matériau électriquement conducteur.

5. Système de piles à combustible selon la revendication 4, **caractérisé en ce que** le matériau (9) électriquement conducteur est un alliage d'apport ou une colle électriquement conductrice.

6. Système de piles à combustible selon l'une des revendications 4 ou 5, **caractérisé en ce que** le perçage (9) est métallisé au niveau de sa face interne.

7. Système de piles à combustible selon la revendication 3, **caractérisé en ce que** le au moins élément de connexion (9), est un rivet.

8. Système de piles à combustible selon l'une des revendications 1 à 7, **caractérisé en ce que** des structures de répartition du gaz (6) sont incorporées dans la première carte à circuits imprimés côté anode.

9. Système de piles à combustible selon l'une des revendications 1 à 8, **caractérisé en ce que** des structures de répartition du gaz (6) sont incorporées dans la seconde carte à circuits imprimés côté cathode.

10. Système de piles à combustible selon l'une des revendications 1 à 8, **caractérisé en ce que** des ouvertures d'air vers l'extérieur sont incorporées dans la seconde carte à circuits imprimés côté cathode.

11. Système de piles à combustible selon l'une des revendications 1 à 10, **caractérisé en ce que** les piles à combustible présentent respectivement une zone de réaction (12) incorporée dans la carte à circuits imprimés, laquelle est délimitée par une élévation (13) en matériau de carte à circuits imprimés et/ou en laque.

12. Système de piles à combustible selon l'une des revendications 1 à 11, **caractérisé en ce que** la zone de réaction contient une structure de répartition du gaz (6) et un collecteur de courant (1) et **en ce qu'**est prévue une couche de diffusion (2) qui est appliquée en nappe sur le collecteur de courant (1).

13. Système de piles à combustible selon l'une des revendications 1 à 12, **caractérisé en ce que** la couche de diffusion (2) est exécutée en tant que tissu synthétique muni de segments métallisés.

14. Système de piles à combustible selon l'une des revendications 1 à 13, **caractérisé en ce que** les barrettes de connexion (8, 8', 14, 14', 40, 17, 17', 18, 18') et/ou les contacts externes (5, 5') contenus dans le système de piles à combustible sont revêtus de couches électriquement conductrices en une ou plusieurs couches pour éviter la corrosion.

15. Système de piles à combustible selon l'une des revendications 1 à 14, **caractérisé en ce que** la membrane électrolyte polymère (3) est exécutée en tant qu'assemblage membrane-électrode (Membrane-Electrode-Assembly, ou MEA) segmenté.

16. Système de piles à combustible selon l'une des revendications 1 à 15, **caractérisé en ce qu'**il présente un circuit électronique sur la surface du composite de carte à circuits imprimés.

17. Système de piles à combustible selon l'une des revendications 1 à 16, **caractérisé en ce que** les barrettes de connexion (18, 18') de la première et de la seconde cartes à circuits imprimés sont disposées sur celles-ci respectivement côté zone de réaction et sont en contact électrique durable par une connexion soudée.

18. Système de piles à combustible planaire comportant au moins deux piles à combustible, qui sont électriquement connectées en série dans un plan par des pistes conductrices (25) et qui présentent des collecteurs de courant (1, 1') reliés électriquement avec les éléments de connexion (25) et présentent une membrane électrolyte polymère (3), le trajet du courant étant amené autour de la membrane électrolyte polymère (3),
**caractérisé en ce que** le système de piles à combustible est exécuté selon la technique des cartes à circuit imprimé et en tant que composite d'une première carte à circuits imprimés (21) côté anode et d'une seconde carte à circuits imprimés (22) côté cathode, et **en ce que** les collecteurs de courant (1, 1') et les éléments de connexion (25) sont exécutés en tant que pistes conductrices de ces cartes à circuits imprimés, les cartes à circuits imprimés présentant respectivement en alternance des structures de répartition du gaz d'anode et de cathode et un collecteur de courant d'anode (1) et un collecteur de courant de cathode (1') voisins étant respectivement reliés électriquement au moyen d'un élément de connexion (25).

19. Procédé de fabrication d'un système de cellules à combustible selon l'une des revendications précédentes, dans lequel on sélectionne un premier et un second support de cartes à circuits imprimés (10, 11) présentant respectivement une face supérieure et une face inférieure, et on réalise pour les deux supports, sur la face supérieure, respectivement
- l'application de la métallisation sur les supports de cartes à circuits imprimés, de telle sorte qu'il se forme une carte à circuits imprimés, où des feuilles métalliques ou des tôles minces issues d'une sélection des matériaux que sont le cuivre, le nickel, l'or, le titane ou l'acier spécial et/ou un alliage de ceux-ci sont laminées sur le matériau de la carte à circuits imprimés, ou la métallisation est réalisée au moyen d'un revêtement (pulvérisation cathodique ou vaporisation) et d'un renforcement galvanique suivant de la couche,
- une élimination sélective de la métallisation par gravure ou fraisage, si bien que se forment les pistes conductrices, qui forment dans les espaces de réaction des collecteurs de courant (1) et des barrettes de connexion (8, 8', 14, 14', 40, 17, 17', 18, 18') contiguës respectivement sans soudure,
- l'incorporation des structures de répartition du gaz (6) dans la carte à circuits imprimés,
- l'application des couches de diffusion (2),
puis l'assemblage membrane-électrode (MEA) (3) est appliqué sur la face supérieure de la première carte à circuits imprimés (10), la première (10) et la seconde (11) cartes à circuits imprimés étant assemblées l'une à l'autre par leurs faces supérieures et les barrettes de connexion (8, 8', 14, 14', 40, 17, 17', 18, 18') étant reliées ensemble verticalement.

20. Procédé selon la revendication 19, **caractérisé en ce que** l'on utilise comme assemblage membrane-électrode (MEA) (3) un MEA revêtu par voie catalytique sur toute sa surface et segmenté avant l'application sur la carte à circuits imprimés.

21. Procédé selon la revendication 20, **caractérisé en ce que** la segmentation de la MEA (3) est incorporée par coupe au laser et/ou corrosion ionique réactive.

22. Procédé selon l'une des revendications 19 à 21, **caractérisé en ce qu'**après l'incorporation des structures de répartition du gaz, on applique une élévation entourant les espaces de réaction, si bien qu'il se forme respectivement un creux dans la zone des espaces de réaction.

## Claims

1. Planar fuel cell system with at least two fuel cells which are via horizontally overlapping connecting strips (8, 8', 14, 14', 40, 17, 17', 18, 18') electrically in series connected in the level and comprise respectively at the side of the anode (10) and at the side of the cathode (11) current collectors (1) which are electrically connected to the connecting strips (8, 8', 14, 14', 40, 17, 17', 18, 18') and have a polymer-electrolyte membrane (3), and the current track is guided around the polymer-electrolyte membrane (3), **characterised in that** the fuel cell system is designed in circuitboard fashion and as a composition of a first circuitboard (10) at the side of the anode and a second circuitboard (11) at the side of the cathode , and the current collectors (1) and connecting strips (8, 8', 14, 14', 40, 17, 17', 18, 18') are designed as conducting tracks.

2. Fuel cell system according to Claim 1, **characterised in that** the connecting strips (8, 8', 14, 14', 40, 17, 17', 18, 18') are located within the defines of the circuitboard composition.

3. Fuel cell system according to one of Claims 1 or 2, **characterised in that** the connecting strips (8, 8', 14, 14', 40, 17, 17', 18, 18') are in their overlapping area respectively connected by at least one perpendicular contact element (9).

4. Fuel cell system according to Claim 3, **characterised in that** the at least one perpendicular contact element (9) is a bore packed with electrically conductive material.

5. Fuel cell system according to Claim 4, **characterised in that** the electrically conductive material (9) is a solder or electrically conductive adhesive.

6. Fuel cell system according to one of Claims 4 or 5, **characterised in that that** the bore (9) is at its inside metallised.

7. Fuel cell system according to Claim 3, **characterised in that** the at least one perpendicular contact element (9) is a rivet.

8. Fuel cell system according to one of Claims 1 to 7, **characterised in that** gas distributing structures (6) are incorporated into the first circuitboard at the side of the anode.

9. Fuel cell system according to one of Claims 1 to 8, **characterised in that** gas distributing structures (6) are incorporated into the second circuitboard at the side of the cathode.

10. Fuel cell system according to one of Claims 1 to 8, **characterised in that** air openings towards the exterior are incorporated into the second circuitboard at the side of the cathode.

11. Fuel cell system according to one of Claims 1 to 10, **characterised in that** the fuel cells have a reaction range (12) incorporated into the circuitboard which is defined by raised circuitboard material (13) and/or lacquer.

12. Fuel cell system according to one of Claims 1 to 11, **characterised in that** the reaction range includes a gas distributing structure (6) and a current collector (1), and a diffusion layer (2) is provided which is surface mounted onto the current collector (1).

13. Fuel cell system according to one of Claims 1 to 12, **characterised in that** the diffusion layer (2) is of a synthetic weave provided with metallised segments.

14. Fuel cell system according to one of Claims 1 to 13, **characterised in that** the conducting tracks (8, 8', 14, 14', 40, 17, 17', 18, 18') and/or external contacts within the fuel cell system are coated with single or multi-layered electrically conductive layers so as to prevent corrosion.

15. ; Fuel cell system according to one of Claims 1 to 14, **characterised in that** the polymer-electrolyte membrane (3) is designed as a segmented membrane-electrode assembly (MEA).

16. Fuel cell system according to one of Claims 1 to 15, **characterised in that** it has on the surface of the circuitboard composition an electronic circuit.

17. Fuel cell system according to one of Claims 1 to 16, **characterised in that** the connecting strips (18, 18') of the first and the second circuitboard are respectively arranged thereon at the side of the reactive range and continuously electrically contacted by way of a welding connection.

18. Planar fuel cell system with at least two fuel cells which are via conducting tracks (25) electrically connected in series at the level and which comprise current collectors (1, 1') which are electrically connected to the connecting elements (25) and a polymer-electrolyte membrane (3), and the current track is ducted around the polymer-electrolyte membrane (3), **characterised in that** the fuel cell system is produced in circuitboard technique and as a composition of a first circuitboard (21) and a second circuitboard (22), and the current collectors (1, 1') and connecting elements (25) are produced as circuit tracks of said circuitboards, and the circuitboards offer respectively alternating anode and cathode gas distributing structures, and a respective adjacent anode current collector (1) and cathode current collector (1') is electrically connected by means of the connecting element (25).

19. Method for producing a fuel cell system according to one of the above claims, and a first and a second circuitboard support (10, 11) with a respective top and a bottom side is selected, and for both supports at the top are carried out the following stages:
• Application of metallisation onto the circuitboard support, thus producing a circuitboard, and metal foils or thin metal of a selection of materials copper, nickel, gold, titanium or precious steel and/or an alloy thereof is laminated onto the circuitboard material, and metallisation is realised by means of coating (sputtering or vapourising) and subsequent galvanic reinforcement of the coating;
• selective removal by etching or milling of the metallisation, so that conductive tracks are established which form in the reaction areas current collectors (1) and seamlessly adjacent thereto connecting strips (8, 8', 14, 14', 17, 17', 25);
• incorporating the gas distributor structures (6) into the circuitboard;
• application of the diffusion layers (2),
and subsequently the membrane electrode assembly (MEA) (3) is applied onto the top of the first circuitboard, the second (10) and the second (11) circuitboard are with their tops joined and the connecting strips (8, 8', 14, 14', 40, 17, 17', 18, 18') are perpendicularly interconnected.

20. Method according to Claim 19, **characterised in that** as membrane electrode assembly (MEA) are selected full-surface catalytically coated MEA and segmented prior to application onto the circuitboard.

21. Method according to Claim 20, **characterised in that** segmentation of the MEA (3) is incorporated by laser ablation and/or reactive ion etching.

22. Method according to one of Claims 19 to 21, **characterised in that** following incorporation of the gas distributing structures an elevation which surrounds the reaction areas is applied so that only one respective recess develops in the area of the reaction areas.
